# FASCICULE DE BREVET EUROPEEN

(11) **EP 3 197 842 B1**
(45) Date de publication et mention de la délivrance du brevet: **21.11.2018**
(21) Numéro de dépôt: 15775777.4
(22) Date de dépôt: 21.09.2015
(51) Int. Cl.: C03C 3/097, C03C 13/06

(54) **LAINE MINERALE**
MINERALWOLLE
MINERAL WOOL

(30) Priorité: 26.09.2014 FR 1459129
(43) Date de publication de la demande: 02.08.2017
(73) Titulaire: Saint-Gobain Isover, 92400 Courbevoie (FR)
(72) Inventeur: CLATOT, Richard, 60700 Fleurines (FR); RAGUENET, Bérangère, 75018 Paris (FR)
(74) Mandataire: Saint-Gobain Recherche
(86) Numéro de dépôt international: PCT/FR2015/052521
(87) Numéro de publication internationale: WO 2016/046480

(56) Documents cités:
- EP-A1- 0 525 816
- EP-A1- 0 936 198
- EP-A1- 1 265 821
- WO-A1-2005/033032
- DATABASE WPI Week 198631 20 juin 1986 (1986-06-20) Thomson Scientific, London, GB; AN 1986-200700 XP002740157, & JP S61 132540 A (SUMITOMO METAL IND LTD) 20 juin 1986 (1986-06-20)

## Description

L'invention se rapporte au domaine des laines minérales. Elle concerne plus précisément des laines minérales présentant une composition chimique qui leur confère une bonne résistance au feu et aux températures élevées.

Des laines minérales dont la composition chimique contient des teneurs élevées en alumine (typiquement 14 à 27%) se sont révélées présenter de telles propriétés. De telles compositions sont aptes à être fibrées par centrifugation externe, c'est-à-dire au moyen de rotors sur la surface externe desquels les fibres sont formées puis étirées. Certaines d'entre elles se prêtent à un fibrage par centrifugation interne, c'est-à-dire ayant recours à des centrifugeurs tournant à grande vitesse et percés d'orifices.

Il est en particulier connu des demandes WO 00/17117 et WO2005/033032 des compositions de verre aptes à être fibrées par un procédé de centrifugation interne, Ces compositions se caractérisent en particulier par une teneur élevée en alumine (de 16 à 27%) et une teneur élevée en oxydes alcalins (10 à 17%), la teneur en silice allant de 39 à 55%. Les laines minérales ainsi produites présentent des propriétés thermiques (notamment de résistance au feu et aux températures élevées) nettement améliorées par rapport à la laine de verre de composition standard. Ces fibres sont également biosolubles, au sens où elles peuvent se dissoudre rapidement dans les fluides physiologiques de l'environnement du poumon.

L'invention a pour but d'améliorer encore la résistance au feu et aux températures élevées de ces laines minérales.

A cet effet, l'invention a pour objet une laine minérale comprenant des fibres de verre dont la composition chimique comprend les constituants suivants, en une teneur pondérale variant dans les limites ci-après définies :

| | |
|---|---|
| SiO₂ | 35-55% |
| Al₂O₃ | 14-27% |
| CaO | 3-35% |
| MgO | 0-15% |
| Na₂O+K₂O | 1-17% |
| Fe₂O₃ | 2-15% |
| B₂O₃ | 0-8% |
| SnO₂ | 0,01-3%. |

Cette composition se prête notamment au fibrage par centrifugation externe.

De préférence, la composition chimique de la laine minérale comprend les constituants suivants, en une teneur pondérale variant dans les limites ci-après définies :

| | |
|---|---|
| SiO₂ | 39-55% |
| Al₂O₃ | 16-27% |
| CaO | 3-35% |
| MgO | 0-5% |
| Na₂O+K₂O | 9-17% |
| Fe₂O₃ | 2-15% |
| B₂O₃ | 0-8% |
| SnO₂ | 0,01-3%. |

Ces compositions sont particulièrement adaptées au fibrage par centrifugation interne.

Dans l'intégralité du présent texte, les teneurs sont exprimées en pourcentages pondéraux.

La somme des teneurs en silice et alumine (SiO₂+Al₂O₃) est de préférence comprise entre 57 et 70%, notamment entre 62 et 68%. La teneur en alumine est de préférence comprise dans un domaine allant de 20 à 25%, notamment de 21 à 24%.

La teneur en silice (SiO₂) est avantageusement comprise dans un domaine allant de 40 à 44%.

La teneur en magnésie (MgO) est avantageusement d'au plus 3%, voire 2,5%, afin de minimiser la température au liquidus, et donc la température de fibrage, de manière à optimiser la durée de vie des centrifugeurs lorsque la laine minérale est obtenue par centrifugation interne, technique décrite dans la suite du texte.

La teneur en chaux (CaO) est de préférence comprise dans un domaine allant de 10 à 17%, notamment de 12 à 16%. La somme des teneurs en chaux et magnésie est quant à elle de préférence comprise dans un domaine allant de 14 à 20%, notamment de 15 à 18%. De préférence, la teneur en oxyde de baryum (BaO) est d'au plus 1%, notamment 0,5%. La teneur en oxyde de strontium (SrO) est quant à elle de préférence d'au plus 1%, voire 0,5% et même 0,1% ou encore nulle.

La teneur totale en oxydes alcalins (soude et potasse - Na₂O+K₂O) est de préférence d'au plus 13%, voire 12%. La teneur en Na₂O est avantageusement comprise dans un domaine allant de 4 à 9%, notamment de 5 à 8%. La teneur en K₂O est quant à elle avantageusement comprise dans un domaine allant de 3 à 6%. La laine minérale ne comprend de préférence pas d'autre oxyde alcalin que Na₂O et K₂O. Elle peut néanmoins contenir de faibles quantités de Li₂O, parfois présent en tant qu'impuretés dans certains feldspaths.

L'oxyde de fer (Fe₂O₃) a un impact positif sur la nucléation et la croissance de germes à basse température, et donc sur la tenue en température de la laine minérale, tout en ne pénalisant pas la température au liquidus. Sa teneur totale (exprimée sous la forme Fe₂O₃, que le fer soit sous forme ferrique ou ferreuse) est de préférence d'au moins 4%, voire 5% et/ou d'au plus 7% ou 6%. Le rédox, qui correspond au rapport entre la teneur en oxyde de fer ferreux et la teneur totale en oxyde de fer, est généralement compris dans un domaine allant de 0,1 à 1, notamment de 0,1 à 0,7.

La composition de la laine minérale selon l'invention peut également contenir P₂O₅, notamment à des teneurs comprises entre 0 et 3 %, voire entre 0 et 1,2 % pour augmenter la biosolubilité à pH neutre.

L'oxyde de titane (TiO₂) procure un effet très sensible sur la nucléation à haute et à basse température de spinelles dans la matrice vitreuse. Une teneur de l'ordre de 1 % ou moins peut se révéler avantageuse.

La teneur pondérale en oxyde d'étain (exprimé sous la forme SnO₂, que l'étain soit dans la fibre sous forme stanneuse ou stannique) est de préférence comprise dans un domaine allant de 0,02 à 2,5%, notamment de 0,03 à 2%, voire de 0, 05 à 1% ou de 0,1 à 0,8% ou de 0,1 à 0,5%. Les inventeurs ont pu mettre en évidence que l'oxyde d'étain avait, même à faible teneur, un effet bénéfique particulièrement important sur la résistance thermique de la laine minérale.

La composition chimique des fibres de verre de la laine minérale selon l'invention comprend avantageusement de l'oxyde de zirconium (ZrO₂), en une teneur d'au plus 3%, notamment comprise dans un domaine allant de 0,05 à 3%, voire 0,1 à 2% et même 0,1 à 1% ou de 0,2 à 0,5%. Cet oxyde s'est également révélé avoir un effet bénéfique sur la résistance thermique de la laine minérale. Cet effet est notamment important lorsque ZrO₂ est utilisé en combinaison avec SnO₂. Sans que la cause scientifique en soit connue, il semble exister un effet de synergie entre ces deux oxydes. La somme des teneurs pondérales en ZrO₂ et SnO₂ (ZrO₂+SnO₂) est de préférence comprise dans un domaine allant de 0,1 à 3%, notamment de 0,2 à 2% et même de 0,3 à 1%.

La teneur pondérale en oxyde de chrome (Cr₂O₃) dans le verre fondu (avant l'étape de fibrage) est de préférence d'au plus 0,03%, notamment 0,02%, voire 0,01%, et même 0,005% (50ppm). Il est en effet apparu qu'au-delà de ces teneurs, la température au liquidus du verre augmentait trop fortement, générant l'obturation des orifices susmentionnés. Pour ce faire, le mélange vitrifiable employé ne contiendra généralement de l'oxyde de chrome que sous forme de traces (quelques dizaines de ppm).

Il va de soi que les différentes plages préférées décrites ci-avant peuvent être combinées librement les unes avec les autres, les différentes combinaisons ne pouvant toutes êtres énumérées pour des raisons de concision.

Quelques combinaisons préférées sont décrites ci-après.

Selon un mode de réalisation préféré, les fibres de verre présentent une composition chimique comprenant les constituants suivants, en une teneur pondérale variant dans les limites ci-après définies :

| | |
|---|---|
| SiO₂ | 39-46% |
| Al₂O₃ | 16-27% |
| CaO | 6-20% |
| MgO | 0,5-5% |
| Na₂O+K₂O | 9-15% |
| Fe₂O₃ | 2-15% |
| B₂O₃ | 0-2% |
| P₂O₅ | 0-3% |
| TiO₂ | 0-2% |
| SnO₂ | 0,02-2%. |

Selon un mode de réalisation particulièrement préféré, les fibres de verre présentent une composition chimique comprenant les constituants suivants, en une teneur pondérale variant dans les limites ci-après définies :

| | |
|---|---|
| SiO₂ | 40-45% |
| Al₂O₃ | 18-26% |
| CaO | 8-18% |
| MgO | 0,5-3% |
| Na₂O+K₂O | 10-13% |
| Fe₂O₃ | 3-8% |
| B₂O₃ | 0% |
| P₂O₅ | 0-1% |
| TiO₂ | 0,1-1% |
| SnO₂ | 0,03 à 1 %. |

De préférence, la teneur totale en SiO₂, Al₂O₃, CaO, MgO, Na₂O, K₂O, Fe₂O₃ (fer total) et SnO₂ est d'au moins 90%, notamment 95% et même 97 ou 98%.

Ces compositions sont bien adaptées au procédé de fibrage par centrifugation interne, avec une viscosité à la température de 1400°C généralement de plus de 40 poises, notamment de l'ordre de 50 à 100 poises (1 poise = 0,1Pa.s).

Ces compositions présentent des températures de transition vitreuse élevées, notamment supérieures à 600°C, en particulier supérieures ou égales à 650°C. Leur température supérieure de recuisson (annealing point) est généralement largement supérieure à 600°C, notamment de l'ordre de 670°C ou plus, souvent de 700°C ou plus.

L'invention a également pour objet un produit d'isolation thermique comprenant de la laine minérale selon l'invention. Un tel produit se présente notamment sous la forme de rouleaux ou de panneaux. Il peut être employé par exemple dans des bâtiments, dans l'industrie ou dans des moyens de transport, notamment ferroviaire ou maritime. Il est particulièrement adapté à des applications dans lesquelles il peut être amené à subir des températures élevées, soit en continu (isolation de fours ou étuves domestiques ou industriels, de conduites de transport de fluides) soit de manière accidentelle, dans un rôle de protection contre le feu (portes anti-feu, isolation de navires...). Plus généralement, le produit selon l'invention peut être employé pour isoler thermiquement tout type de bâtiments, tertiaires ou d'habitation (collective ou individuelle). Il peut par exemple être utilisé dans des systèmes d'isolation par l'extérieur, pour l'isolation de maisons à ossature bois, dans des panneaux sandwichs, dans des conduits de ventilation etc...

L'invention a également pour objet un procédé d'obtention d'une laine minérale selon l'invention, comprenant une étape de fusion d'un verre possédant sensiblement la même composition chimique que celle de ladite laine minérale puis une étape de fibrage, notamment par un procédé de centrifugation interne.

L'étape de fusion permet d'obtenir un bain de verre fondu à partir d'un mélange vitrifiable.

Le mélange vitrifiable comprend diverses matières premières naturelles et/ou artificielles, par exemple du sable de silice, de la phonolithe, des feldspaths, du carbonate de sodium etc...

Le mélange vitrifiable comprend de préférence au moins un porteur d'étain, de préférence de l'oxyde d'étain sous forme d'oxyde stannique (SnO₂). Alternativement, le mélange vitrifiable peut ne pas contenir de porteur d'étain, l'oxydé d'étain étant par exemple apporté grâce à l'usure des réfractaires du four.

L'étape de fusion peut être réalisée de différentes manières connues, notamment par fusion dans un four à flammes ou par fusion électrique.

Le four à flammes comprend au moins un brûleur, aérien (les flammes sont disposées au-dessus du bain de verre et le chauffent par rayonnement) ou submergé (les flammes sont créées directement au sein du bain de verre). Le ou chaque brûleur peut être alimenté par divers combustibles tels que le gaz naturel ou le fioul.

Par « fusion électrique », on entend que le verre est fondu par effet Joule, au moyen d'électrodes immergées dans le bain de verre, à l'exclusion de toute utilisation d'autres moyens de chauffage, tels que des flammes. Le mélange vitrifiable est normalement réparti de manière homogène sur la surface du bain de verre à l'aide d'un dispositif mécanique, et constitue ainsi un écran thermique limitant la température au-dessus du bain de verre, si bien que la présence d'une superstructure n'est pas toujours nécessaire. Les électrodes sont immergées dans le verre fondu. Elles peuvent être suspendues de manière à plonger dans le bain de verre par le dessus, être installées dans la sole, ou encore être installées dans les parois latérales de la cuve. Les deux premières options sont généralement préférées pour les cuves de grandes dimensions afin de répartir au mieux le chauffage du bain de verre. Les électrodes sont de préférence en molybdène, voire éventuellement en oxyde d'étain. Le passage de l'électrode en molybdène à travers la sole se fait de préférence par l'intermédiaire d'un porte-électrode en acier refroidi à l'eau.

L'étape de fusion peut également mettre en oeuvre à la fois une fusion flammes et une fusion électrique, par exemple en employant un four à flammes également muni d'électrodes en sole servant à accélérer la fusion du mélange vitrifiable.

L'étape de fibrage est de préférence réalisée par centrifugation interne, par exemple selon l'enseignement de la demande WO 93/02977. Les compositions sont en effet bien adaptées à ce mode de fibrage, leurs paliers de travail (correspondant à la différence entre la température à laquelle le logarithme décimal de la viscosité vaut 2,5 et la température au liquidus) étant généralement d'au moins 50°C, voire 100°C et même 150°C. Les températures au liquidus sont peu élevées, généralement d'au plus 1200°C, voire 1150°C, et compatibles avec l'utilisation de centrifugeurs. Le procédé de centrifugation interne met en oeuvre des centrifugeurs, aussi appelés assiettes de fibrage, tournant à grande vitesse et percés d'orifices à leur périphérie. Le verre fondu est acheminé par gravité au centre du centrifugeur, et, sous l'effet de la force centrifuge, est éjecté au travers des orifices pour former des filets de verre, lesquels sont étirés vers le bas par des jets de gaz chauds émis par des brûleurs.

La composition chimique de la laine minérale selon l'invention la rend apte à être obtenue par d'autres procédés de fibrage, notamment par centrifugation externe, c'est-à-dire en déversant le verre fondu sur la surface externe de rouleaux en rotation pour former des filets de verre qui sont étirés par des jets de gaz chaud. Ce procédé est toutefois moins préféré car il génère des grains ou infibrés.

Les fibres obtenues sont liées entre elles à l'aide d'une composition d'encollage pulvérisée à leur surface, avant d'être réceptionnées et mises en forme pour donner divers produits de laine minérales, comme des rouleaux ou des panneaux.

Afin d'obtenir une résistance thermique encore meilleure, la laine minérale comprend avantageusement un composé du phosphore, de préférence pulvérisé en même temps que la composition d'encollage. Le composé du phosphore peut être minéral, tel que décrit dans la demande WO 01/68546 ou en partie organique, par exemple un oligomère ou polymère du type polyacide ou polyester phosphonique ou phosphorique, comme enseigné par la demande WO 2006/103375.

Les exemples qui suivent illustrent l'invention de manière non-limitative.

Des produits de laine minérale A (comparative) ont été obtenus en fibrant par centrifugation interne un verre dont la composition est reproduite ci-après :

| | |
|---|---|
| SiO₂ | 42,7% |
| Al₂O₃ | 23,5% |
| CaO | 14,9% |
| MgO | 1,4% |
| Na₂O | 6,6% |
| K₂O | 4,1% |
| Fe₂O₃ | 5,5% |
| P₂O₅ | 0,7% |
| TiO₂ | 0,6% |
| ZrO₂ | 0,1%. |

Des produits de laine minérale B (selon l'invention) ont été obtenus en fibrant de la même manière la même composition, à laquelle on a ajouté 0,05% de SnO₂. Les produits contenaient 2% en poids de liant (composition d'encollage).

Ces produits ont été soumis à un essai de résistance au feu dans le FTP (Fire Test Procedures) Code 2010 publié par l'IMO (International Maritime Organization).

Ces tests consistent à appliquer une courbe de température normalisée (norme ISO 834) simulant un incendie à un four dont la paroi horizontale supérieure est formée d'une plaque d'acier sur le côté externe de laquelle est fixé le produit de laine minérale, en contact avec l'air. Les produits testés avaient une densité de 66 kg/m³ et une épaisseur de 70 mm. La température moyenne de la face externe du produit (opposée à la plaque d'acier) est mesurée à l'aide de thermocouples.

Dans le cas du produit A, le temps au bout duquel la température de la face externe s'est élevée de 140°C est de 85 minutes. Au bout de 60 minutes, la température de la face externe était de 127°C.

Dans le cas du produit B, ces temps et température étaient respectivement de 126 minutes et de 110°C.

Les produits ont également été soumis à un test d'affaissement consistant à porter des échantillons cylindriques dont la hauteur et le diamètre sont d'environ 45 mm à une température de 1000°C pendant un temps de 10 minutes.

Après le test, le produit A s'est affaissé de 63%, contre 52% pour le produit B.

Le produit contenant de l'oxyde d'étain est donc très nettement supérieur en termes de résistance au feu et aux températures élevées.

## Revendications

1. Laine minérale comprenant des fibres de verre dont la composition chimique comprend les constituants suivants, en une teneur pondérale variant dans les limites ci-après définies :
| | |
|---|---|
| SiO₂ | 35-55% |
| Al₂O₃ | 14-27% |
| CaO | 3-35% |
| MgO | 0-15% |
| Na₂O+K₂O | 1-17% |
| Fe₂O₃ | 2-15% |
| B₂O₃ | 0-8% |
| SnO₂ | 0,01-3%. |

2. Laine minérale selon la revendication 1, telle que les fibres de verre présentent une composition chimique comprenant les constituants suivants, en une teneur pondérale variant dans les limites ci-après définies :
| | |
|---|---|
| SiO₂ | 39-55% |
| Al₂O₃ | 16-27% |
| CaO | 3-35% |
| MgO | 0-5% |
| Na₂O+K₂O | 9-17% |
| Fe₂O₃ | 2-15% |
| B₂O₃ | 0-8% |
| SnO₂ | 0,01-3%. |

3. Laine minérale selon l'une des revendications précédentes, telle que la somme des teneurs en silice et alumine est comprise entre 57 et 70%, notamment entre 62 et 68%.

4. Laine minérale selon l'une des revendications précédentes, telle que la teneur en MgO est d'au plus 3%.

5. Laine minérale selon l'une des revendications précédentes, telle que la teneur pondérale en SnO₂ est comprise dans un domaine allant de 0,02 à 2,5%, notamment de 0,03 à 2%.

6. Laine minérale selon l'une des revendications précédentes, telle que la composition chimique des fibres de verre comprend de l'oxyde de zirconium, en une teneur d'au plus 3%, notamment comprise dans un domaine allant de 0,05 à 3%.

7. Laine minérale selon l'une des revendications précédentes, telle que les fibres de verre présentent une composition chimique comprenant les constituants suivants, en une teneur pondérale variant dans les limites ci-après définies :
| | |
|---|---|
| SiO₂ | 39-46% |
| Al₂O₃ | 16-27% |
| CaO | 6-20% |
| MgO | 0,5-5% |
| Na₂O+K₂O | 9-15% |
| Fe₂O₃ | 2-15% |
| B₂O₃ | 0-2% |
| P₂O₅ | 0-3% |
| TiO₂ | 0-2% |
| SnO₂ | 0,02 à 2%. |

8. Laine minérale selon l'une des revendications précédentes, telle que les fibres de verre présentent une composition chimique comprenant les constituants suivants, en une teneur pondérale variant dans les limites ci-après définies :
| | |
|---|---|
| SiO₂ | 40-45% |
| Al₂O₃ | 18-26% |
| CaO | 8-18% |
| MgO | 0,5-3% |
| Na₂O+K₂O | 10-13% |
| Fe₂O₃ | 3-8% |
| B₂O₃ | 0% |
| P₂O₅ | 0-1% |
| TiO₂ | 0,1-1% |
| SnO₂ | 0,03 à 1%. |

9. Produit isolant comprenant de la laine minérale selon l'une des revendications précédentes.

10. Procédé d'obtention d'une laine minérale selon l'une des revendications 1 à 7, comprenant une étape de fusion d'un verre possédant sensiblement la même composition chimique que celle de ladite laine minérale puis une étape de fibrage.

11. Procédé selon la revendication précédente, telle que l'étape de fibrage est réalisée par centrifugation interne.

## Patentansprüche

1. Mineralwolle mit Glasfasern, deren chemische Zusammensetzung die folgenden Bestandteile mit einem Massegehalt umfasst, der innerhalb der im Folgenden festgelegten Grenzwerte variiert:
| | |
|---|---|
| SiO₂ | 35-55 % |
| Al₂O₃ | 14-27 % |
| CaO | 3-35 % |
| MgO | 0-15 % |
| Na₂O+K₂O | 1-17 % |
| Fe₂O₃ | 2-15 % |
| B₂O₃ | 0-8 % |
| SnO₂ | 0,01-3 %. |

2. Mineralwolle nach Anspruch 1, wobei die Glasfasern eine chemische Zusammensetzung aufweisen, die die folgenden Bestandteile mit einem Massegehalt umfasst, der innerhalb der im Folgenden festgelegten Grenzwerte variiert:
| | |
|---|---|
| SiO₂ | 39-55 % |
| Al₂O₃ | 16-27 % |
| CaO | 3-35 % |
| MgO | 0-5 % |
| Na₂O+K₂O | 9-17 % |
| Fe₂O₃ | 2-15 % |
| B₂O₃ | 0-8 % |
| SnO₂ | 0,01-3 %. |

3. Mineralwolle nach einem der vorhergehenden Ansprüche, wobei die Summe der Siliciumdioxid- und Aluminiumoxidgehalte zwischen 57 und 70 % und insbesondere zwischen 62 und 68 % inklusive liegt.

4. Mineralwolle nach einem der vorhergehenden Ansprüche, wobei der Gehalt an MgO höchstens 3 % beträgt.

5. Mineralwolle nach einem der vorhergehenden Ansprüche, wobei der Massegehalt an SnO₂ in einem Bereich von 0,02 bis 2,5 % und insbesondere von 0,03 bis 2 % inklusive liegt.

6. Mineralwolle nach einem der vorhergehenden Ansprüche, wobei die chemische Zusammensetzung der Glasfasern Zirconiumoxid mit einem Gehalt von höchstens 3 %, insbesondere in einem Bereich von 0,05 bis 3 % inklusive umfasst.

7. Mineralwolle nach einem der vorhergehenden Ansprüche, wobei die Glasfasern eine chemische Zusammensetzung aufweisen, die die folgenden Bestandteile mit einem Massegehalt umfasst, der innerhalb der im Folgenden festgelegten Grenzwerte variiert:
| | |
|---|---|
| SiO₂ | 39-46 % |
| Al₂O₃ | 16-27 % |
| CaO | 6-20 % |
| MgO | 0,5-5 % |
| Na₂O+K₂O | 9-15 % |
| Fe₂O₃ | 2-15 % |
| B₂O₃ | 0-2 % |
| P₂O₅ | 0-3 % |
| TiO₂ | 0-2 % |
| SnO₂ | 0,02 bis 2 %. |

8. Mineralwolle nach einem der vorhergehenden Ansprüche, wobei die Glasfasern eine chemische Zusammensetzung aufweisen, die die folgenden Bestandteile mit einem Massegehalt umfasst, der innerhalb der im Folgenden festgelegten Grenzwerte variiert:
| | |
|---|---|
| SiO₂ | 40-45 % |
| Al₂O₃ | 18-26 % |
| CaO | 8-18 % |
| MgO | 0,5-3 % |
| Na₂O+K₂O | 10-13 % |
| Fe₂O₃ | 3-8 % |
| B₂O₃ | 0 % |
| P₂O₅ | 0-1 % |
| TiO₂ | 0,1-1 % |
| SnO₂ | 0,03 bis 1 %. |

9. Dämmprodukt mit Mineralwolle nach einem der vorhergehenden Ansprüche.

10. Verfahren zum Erhalten einer Mineralwolle nach einem der Ansprüche 1 bis 7, umfassend einen Schritt des Schmelzens eines Glases, das im Wesentlichen die gleiche chemische Zusammensetzung wie die Mineralwolle besitzt, und anschließend einen Schritt des Zerfaserns.

11. Verfahren nach vorhergehendem Anspruch, wobei der Schritt des Zerfaserns durch interne Zentrifugation ausgeführt wird.

## Claims

1. A mineral wool comprising glass fibers, the chemical composition of which comprises the following constituents, in a content by weight varying within the limits defined below:
| | |
|---|---|
| SiO₂ | 35-55% |
| Al₂O₃ | 14-27% |
| CaO | 3-35% |
| MgO | 0-15% |
| Na₂O+K₂O | 1-17% |
| Fe₂O₃ | 2-15% |
| B₂O₃ | 0-8% |
| SnO₂ | 0.01-3%. |

2. The mineral wool as claimed in claim 1, such that the glass fibers exhibit a chemical composition comprising the following constituents, in a content by weight varying within the limits defined below:
| | |
|---|---|
| SiO₂ | 39-55% |
| Al₂O₃ | 16-27% |
| CaO | 3-35% |
| MgO | 0-5% |
| Na₂O+K₂O | 9-17% |
| Fe₂O₃ | 2-15% |
| B₂O₃ | 0-8% |
| SnO₂ | 0.01-3%. |

3. The mineral wool as claimed in either of the preceding claims, such that the sum of the contents of silica and alumina is between 57 and 70%, in particular between 62 and 68%.

4. The mineral wool as claimed in one of the preceding claims, such that the content of MgO is at most 3% .

5. The mineral wool as claimed in one of the preceding claims, such that the content by weight of SnO₂ is within a range extending from 0.02 to 2.5%, in particular from 0.03 to 2%.

6. The mineral wool as claimed in one of the preceding claims, such that the chemical composition of the glass fibers comprises zirconium oxide in a content of at most 3%, in particular within a range extending from 0.05 to 3% .

7. The mineral wool as claimed in one of the preceding claims, such that the glass fibers exhibit a chemical composition comprising the following constituents, in a content by weight varying within the limits defined below:
| | |
|---|---|
| SiO₂ | 39-46% |
| Al₂O₃ | 16-27% |
| CaO | 6-20% |
| MgO | 0.5-5% |
| Na₂O+K₂O | 9-15% |
| Fe₂O₃ | 2-15% |
| B₂O₃ | 0-2% |
| P₂O₅ | 0-3% |
| TiO₂ | 0-2% |
| SnO₂ | 0.02 to 2%. |

8. The mineral wool as claimed in one of the preceding claims, such that the glass fibers exhibit a chemical composition comprising the following constituents, in a content by weight varying within the limits defined below:
| | |
|---|---|
| SiO₂ | 40-45% |
| Al₂O₃ | 18-26% |
| CaO | 8-18% |
| MgO | 0.5-3% |
| Na₂O+K₂O | 10-13% |
| Fe₂O₃ | 3-8% |
| B₂O₃ | 0% |
| P₂O₅ | 0-1% |
| TiO₂ | 0.1-1% |
| SnO₂ | 0.03 to 1%. |

9. An insulating product comprising mineral wool as claimed in one of the preceding claims.

10. A process for producing a mineral wool as claimed in one of claims 1 to 7, comprising a stage of melting a glass having substantially the same chemical composition as that of said mineral wool, followed by a stage of fiberizing.

11. The process as claimed in the preceding claim, such that the stage of fiberizing is carried out by internal centrifugation.
